# EUROPEAN PATENT APPLICATION

(11) **EP 4 246 253 A1**
(43) Date of publication of application: **20.09.2023**
(21) Application number: 22162882.9
(22) Date of filing: 18.03.2022
(51) Int. Cl.: G05B 19/409, G05B 19/418

(54) **LOGISTICS CONVEYER ROLLER CONTROL SYSTEM WITH ONBOARD SETTING FUNCTIONS**

(71) Applicant: Worldwide Logistics Corporation, New Taipei City (TW)
(72) Inventor: WANG, Chi-Chiao, New Taipei City (TW)
(74) Representative: Tiburzi, Andrea

(57) **Abstract**

A logistics conveyer roller control system has a motor module (10), a driver module (20), a control module (30), and an HMI module (40). The driver module (20) is electrically connected to the motor module (10). The driver module (20) and the HMI module (40) are electrically connected to the control module (30). The control module (30) stores multiple control menus. The HMI module (40) has a display unit (41) to display the control menus. When the HMI module (40) generates a selection signal, the control menu sets a corresponding control mode according to the selection signal, and controls the driver module (20) to drive the motor module (10) according to the control mode.

## Description

### 1. Field of the Invention

The present invention relates to a logistics conveyer roller control system, and more particularly to a logistics conveyer roller control system with onboard setting functions.

### 2. Description of Related Art

With the rapid development of the logistics industry in recent years, the conveying technique of the logistics industry determines the delivery speed and efficiency of the merchandise. Nowadays, most of the logistics companies utilize roller systems for conveying merchandise.

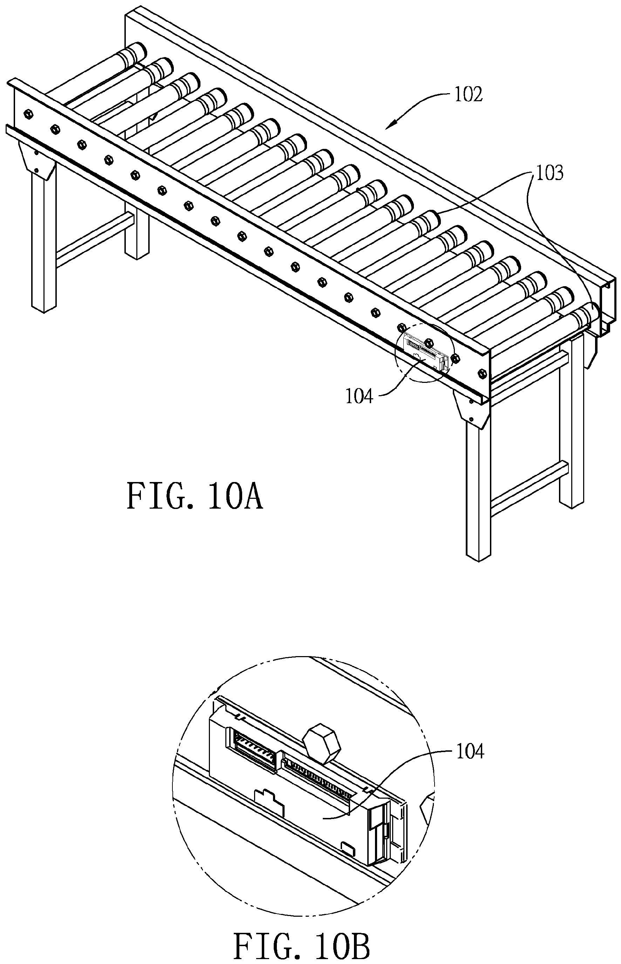

With reference to FIG. 10A and FIG. 10B, a conventional logistic conveyer is installed with multiple rollers 103 to drive the conveyer. Only a few of the rollers 103 are driven by motors, and those driven rollers 103 push the merchandises and further drive other rollers 103 to rotate. Each motor includes a controller 104.

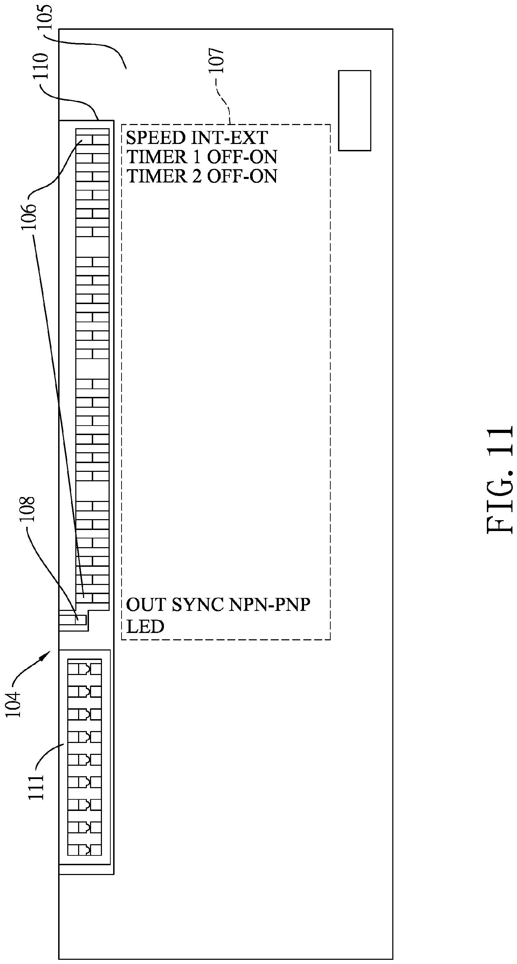

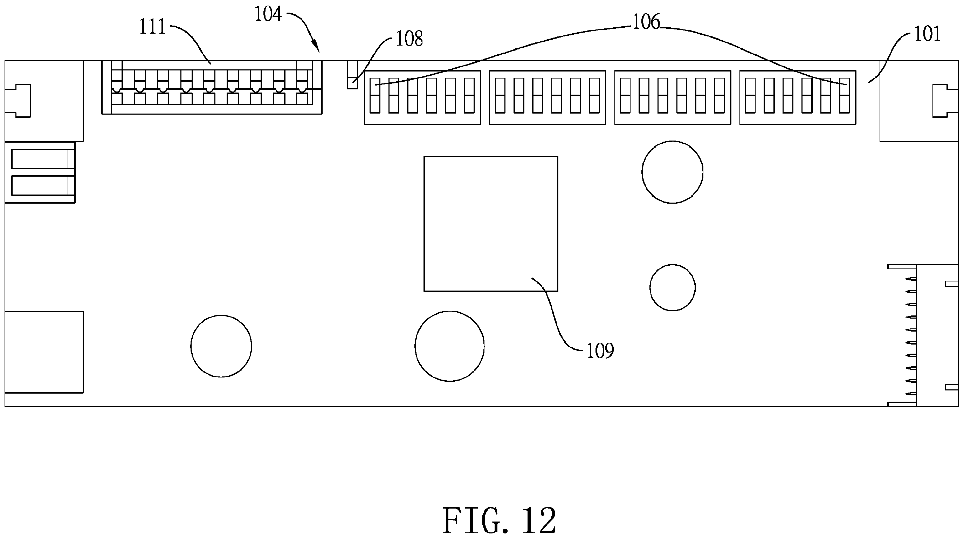

With reference to FIG.11 and FIG.12, more specifically, the controller 104 includes an outer shell 105 and multiple switches 106. The outer shell 105 has an opening 110 that exposes the switches 106 inside the outer shell 105. The switches 106 are mounted on a circuit board 101 inside the outer shell 105, and the switches 106 are electrically connected to a processor 109 on the circuit board 101. An operator of the logistics company can control the operation of the rollers 103 through the switches 106.

However, as shown in FIG. 12, the switches 106 are very tiny and mounted closely. Even though the labels 107 for the switches 106 are printed on the outer shell 105, it is still quite difficult for human eyes to quickly identify the content of the labels 107. In practical usage, the operator needs to spend extra time looking for the label 107 that corresponds to the required switch 106, and spend more time operating the switch 106 without mis-operating another switch 106. Therefore, even though the controllers 104 of the rollers103 nowadays have onboard setting functions, it's still difficult to be operated efficiently.

Furthermore, the controller 104 includes an indicator light 108 for indicating the operation condition of the rollers 103. The indicator light 108 may be an LED light, and different colors of light of the indicator light 108 indicate different operation conditions for the rollers 103. However, the indication method as such is insufficient to indicate all the possible operation conditions of the rollers 103. In brief, each switch 106 corresponds to two operation conditions. Therefore, there are at least a dozen of operation conditions. In order to show all the operation conditions of the rollers 103, the controller 104 has an output port 111 for connecting to an external device, such as a PDA, to monitor and display all the operation conditions. The output port 111 is mounted on the circuit board 101 and electrically connected to the processor 109. In practical usage, this is very inconvenient, because the operator is unable to monitor the conditions of the rollers 103 in real time without connecting the external device to each of the controllers 104, before continuing the work.

In sum, despite the conventional controllers 104 of the conveyer rollers 103 has onboard setting functions, the operation of the controllers 104 is still very inconvenient and inefficient with the densely disposed switches 106 and indicator lights 108 that cannot indicate all of the operation conditions. Such current situation lowers efficiency of the logistics company and the transferring speed of the merchandises.

An objective of the present invention is to provide a logistics conveyer roller control system that can be conveniently and efficiently operated.

To achieve the foregoing objective, the logistics conveyer roller control system with onboard setting functions of the present invention comprises:
a motor module;
a driver module, electrically connected to the motor module;
a control module, electrically connected to the driver module, and storing multiple control menus; a human-machine interface (HMI) module, electrically connected to the control module, and including a display unit to display the control menu of the control module; wherein
when the HMI module generates a selection signal, the control module sets a corresponding control mode according to the selection signal, and controls the driver module to drive the motor module according to the control mode.

The logistics conveyer roller control system of the present invention displays the control menus on the display unit of the HMI interface module, and generates selection signals by the HMI module, simplifying the operating of the control system for an operator. Compared to the switches that are closely and densely mounted as mentioned in the prior art, the present invention provides a digitalized and concentrated control method, releasing the burden of operating the switches on the roller controller for the operator. The HMI module displays the control modes in the control menus on the display for the operator to browse, and detects the selection of the operator and generates the selection signal to efficiently set up the rotation of the motor module. Additionally, compared to the conventional technique, the display unit can more efficiently present the rotation status information.

Other objectives, advantages and novel features of the invention will become more apparent from the following detailed description when taken in conjunction with the accompanying drawings.
In the drawings:
FIG. 1 is a block diagram of a logistics conveyer roller control system of the present invention.
FIG.2 is a top view of the logistics conveyer roller control system of the present invention.
FIG.3 is another block diagram of the logistics conveyer roller control system of the present invention.
FIG.4 is a schematic view of the logistics conveyer roller control system in operation of the present invention.
FIG.5 is a schematic view of the display unit of the logistics conveyer roller control system at startup of the present invention.
FIG.6 is a schematic view of the displayed control menu of the logistics conveyer roller control system of the present invention.
FIG.7 is a block diagram of a logistics conveyer roller control system of the present invention.
FIG.8 is a schematic view of another displayed control menu of the logistics conveyer roller control system of the present invention.
FIG.9 is a schematic view of another displayed control menu of the logistics conveyer roller control system of the present invention.
FIG. 10A and FIG.10B are schematic views of a conventional logistics conveyer roller control system in operation.
FIG. 11 is a top view of a conventional logistics conveyer roller controller.
FIG. 12 is a top view of a circuit board of a conventional logistics conveyer roller controller.

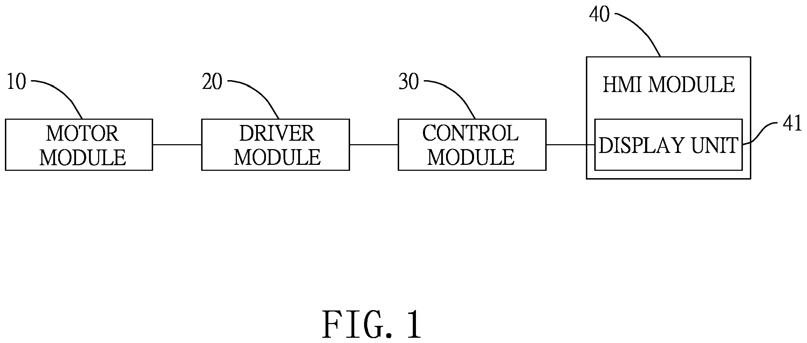

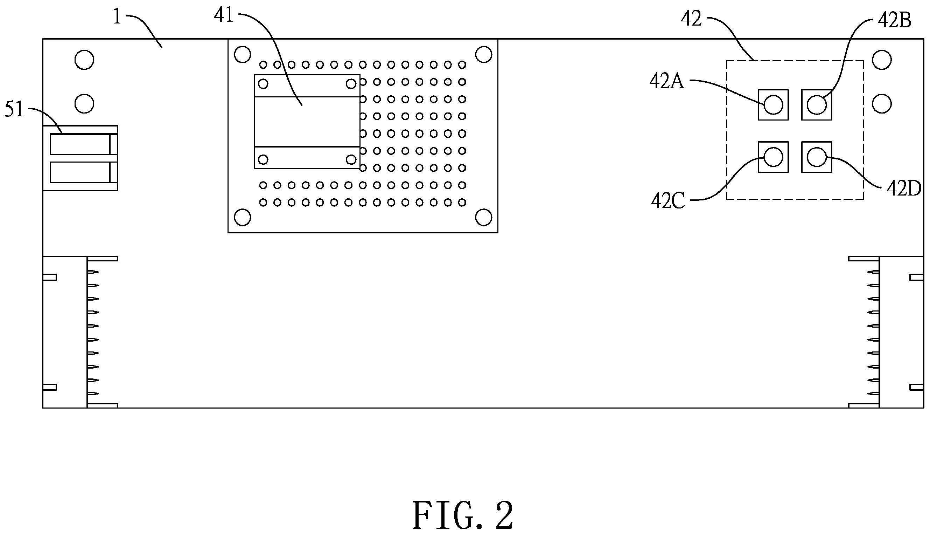

With reference to FIG.1 and FIG.2, the present invention is a logistics conveyer roller control system with onboard setting functions. The logistics conveyer roller control system is mounted on a circuit board 1, and includes a motor module 10, a driver module 20, a control module 30, and a human-machine interface (HMI) module 40.

The driver module 20 is electrically connected to the motor module 10, and the control module 30 is electrically connected to the driver module 20 and the HMI module 40. The control module 30 stores multiple control menus, and the HMI module 40 includes a display unit 41. The display unit 41 displays the control menus of the control module 30 to an operator to present the content to the operator. The content of the control menus includes at least a control mode of the driver module 20. When the HMI module 40 generates a selection signal, the control module 30 sets up a control mode according to the selection signal, and controls the operation of the driver module 20 to drive the motor module 10.

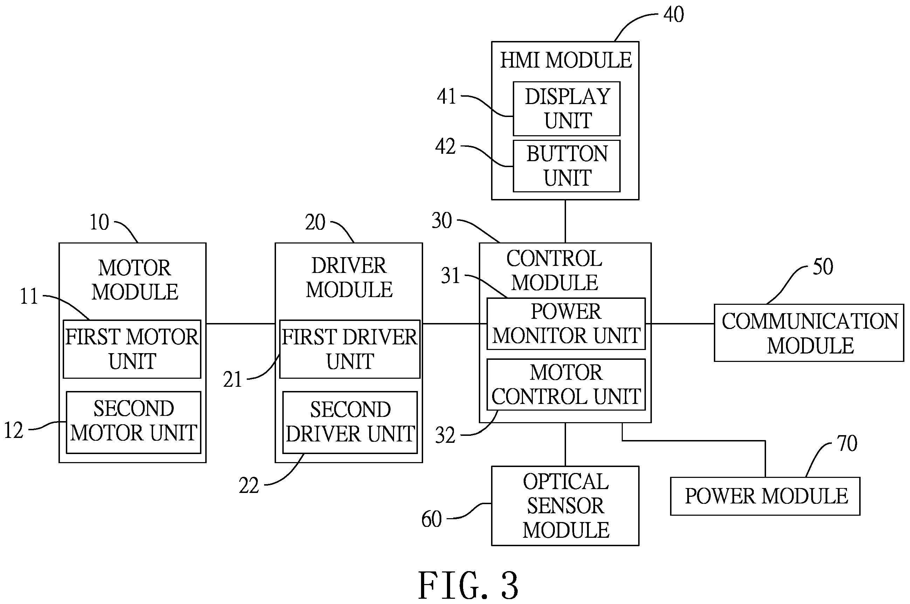

With reference to FIG.2 and FIG.3, in a first embodiment of the present invention, the HMI module 40 further includes a button unit 42. The display unit 41 is a screen, preferably an OLED display screen. When the button unit 42 is activated, the button unit 42 generates a corresponding selection signal and sends the selection signal to the control module 30. When the control module 30 receives the selection signal, the control module 30 controls the display unit 41 to display the control mode that is set according to the selection signal.

In the first embodiment, the logistics conveyer control system of the present invention, hereinafter referred to as a first system, further includes a communication module 50, and the communication module 50 is electrically connected to the control module 30. The control module 30 generates a synchronous signal to a control mode, and transmits the synchronous signal through the communication module 50. Preferably, the communication module 50 is a network communication module, and the synchronous signal is transmitted in a network package to another device that is connected to the communication module 50 through a network. The device that is connected to the communication module 50 through the network is another logistics conveyer control system, hereinafter referred to as a second system. The second system includes another communication module 50, hereinafter referred to as a second communication module. Therefore, the communication module 50 and the second communication module form the network connection. To be more specific, the communication module 50 is electrically connected to a network port 51 such that the communication module 50 is connected to the second communication module through the network port 51 and is able to exchange information with the second communication module. The message that is exchanged between the communication module 50 and the second communication module may be communication protocol for confirming the network connection status, the synchronous signal that the communication module 50 transmits to the second communication module, and the acknowledge signal returned from the second communication module.

When the second system receives the synchronous signal at the second communication module, the second system generates the control mode corresponding to the synchronous system, and controls the driver module 20 of the second system to drive the motor module 10 of the second system to operate. Namely, as the synchronous signal is sent from the communication module 50, the control mode selected at the button unit 42 is duplicated and applied to the second system, such that the second system is synchronized with the first system as described as the present invention.

In another embodiment, the communication module 50 is further connected to a third system. The third system is another logistics conveyer roller control system. The first system, the second system, and the third system form a series connection with the network. When the first system receives the synchronous signal from the third system, the first system also sets the control mode according to the received synchronous signal, and passes on the synchronous signal to the second system. As a result, the first system, the second system and the third system operate in synchronization.

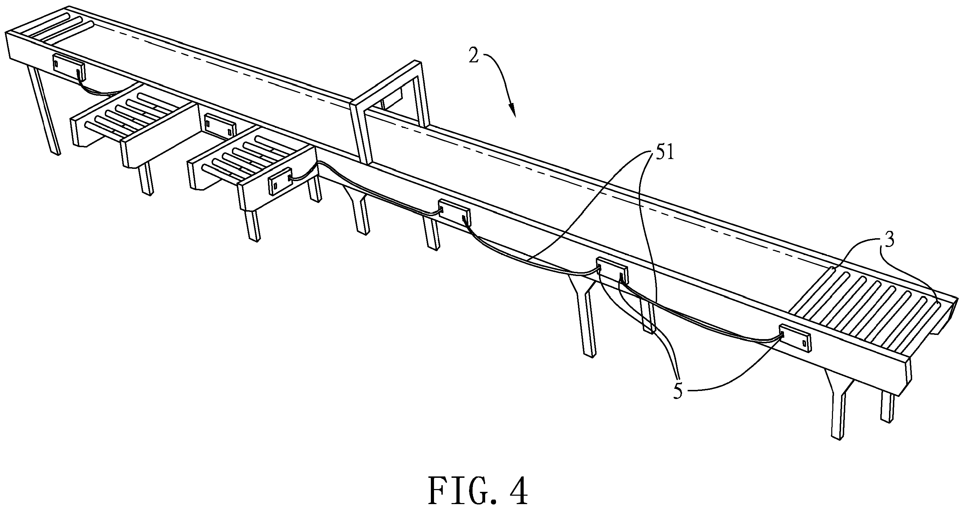

With reference to FIG.4, the present invention is applied to a logistic conveyer 2. The conveyer 2 includes multiple rollers 3. Among all the rollers 3, a few of the rollers are directly driven by the logistics conveyer roller control system of the present invention, and the other rollers only rotate passively when subjected to an external force. The first system, the second system, and the third system are installed along the conveyer 2, and the first system, the second system, and the third system are connected by network cables and network ports 51. Compared to a conventional logistic conveyer, wherein the control systems are connected with analog signal transmission cables and the signals are transmitted in analog form and prone to signal attenuation, the present invention transmits signals and information in digital network packages and ensures the efficiency of the communication between each of the communication modules 50, and extends the number of systems that the synchronous signal can effectively reach.

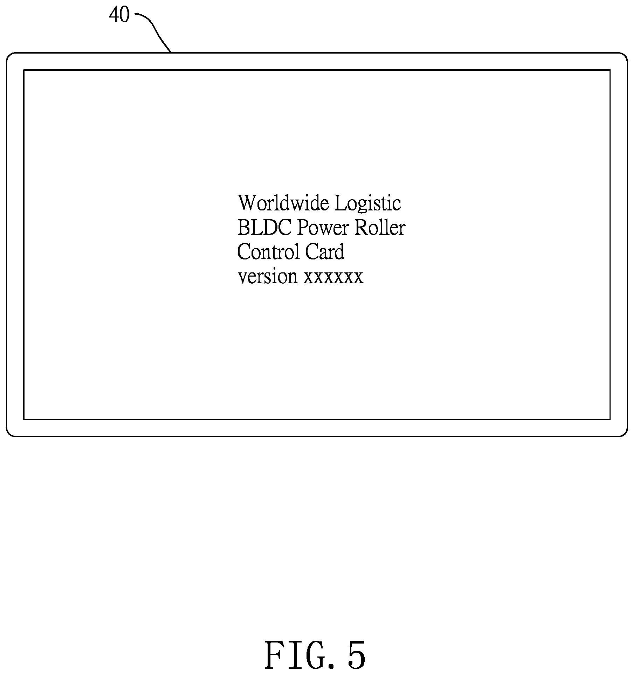

With reference to FIG. 5 to FIG.9, as shown in FIG.2, the button unit 42 includes a first button 42A, a down button 42B, a left button 42C, and a right button 42D. In the present embodiment, a long press on any of the buttons in the button unit 42 will activate the HMI module 40, and the HMI module 40 generates a startup signal and sends the startup signal to the control module 30. The display unit 41 is controlled to display one of the control menus and a cursor 40A. In the present embodiment, the control menus may include a first layer control menu 30A, a second layer control menu 30B, and a third layer control menu 30C. The second layer control menu 30B is the next layer menu of the first level control menu 30A, and the first layer control menu 30A is the previous layer menu of the second layer control menu. The third layer menu 30C is the next layer menu of the second layer menu 30B, and the second layer menu 30B is the previous layer menu of the third layer menu 30C.

When the display unit 41 displays any one of the control menus, and when the up button 42A is activated, the cursor 40A displayed at the display unit 41 moves upward. When the down button 42B is activated, the cursor 40A displayed at the display unit 41 moves downward. When the right button 42D is activated, the button unit 42 generates the selection signal, and the control mode that is set corresponds to the position of the cursor displayed in the displayed control menu. When the left button 42C is activated, the button unit 42 generates a back-to-previous-layer signal, and the control module 30 controls the display unit 41 to display the previous layer menu accordingly.

Despite the control menu currently displayed, when the button unit 42 generates the selection signal, the control module 30 further determines whether to correspond to the next layer menu according to the control mode set by the selection signal; if yes, the control module 30 controls the display unit 41 to display the next layer menu; if there is no corresponding next layer menu, the control menu controls the display unit 41 to display the previous layer menu.

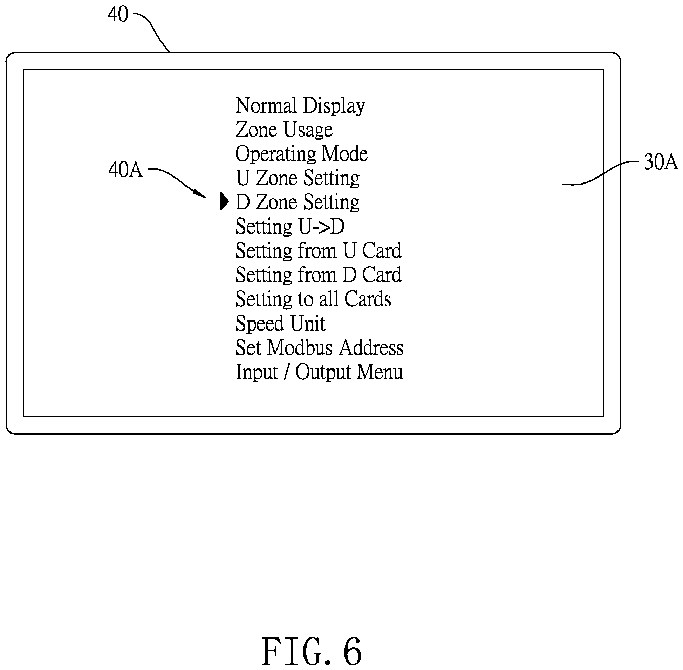

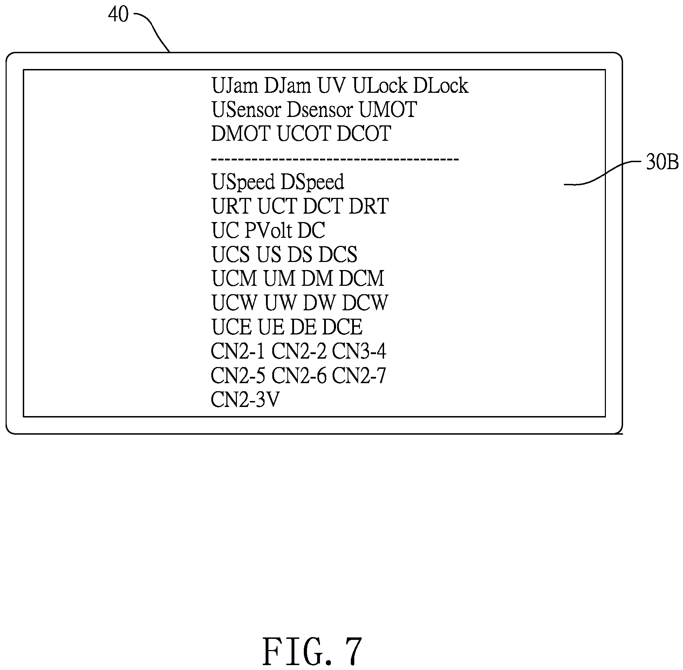

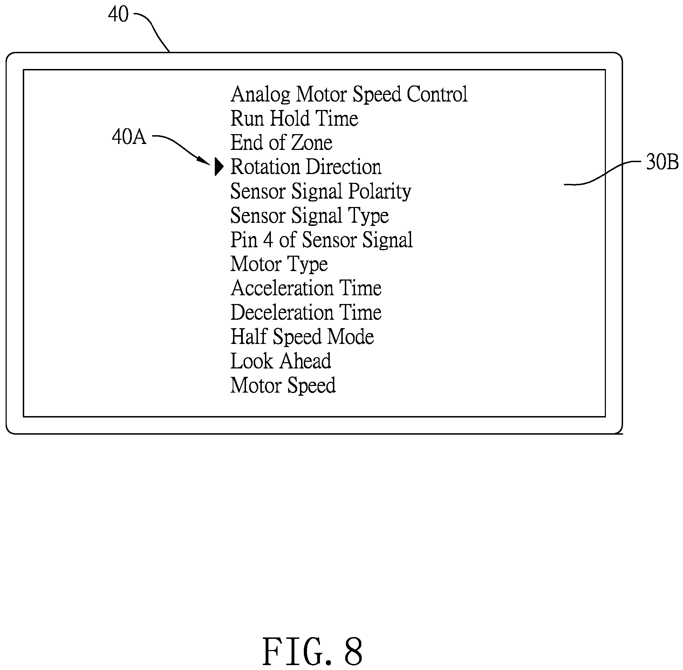

With reference to FIG.6 to FIG.9, FIG.6 is a displayed first layer control menu 30A, and FIGs.7-9 are the displayed second layer control menu. As shown in FIG.8, the cursor 40A is displayed as a triangle mark, and the cursor is pointing to a control mode "Rotation Direction" in the second layer control menu 30B. The content of the "rotation direction" defines the rotation direction of the motor module 10 that is driven by the driver module 30. When the cursor 40A is displayed in the second layer control menu 30B, and the left button 42C is activated, the control module 30 controls the display unit 41 to display the previous layer menu, that is, the first layer control menu 30A as shown in FIG.6, and the cursor 40A isnow displayed in the first layer control menu 30A.

As shown in FIG. 8, when the cursor 40A is displayed in the second layer control menu 30B, and the right button 42D is activated, the selection signal that sets the control mode is the "Rotation Direction" that is pointed by the cursor 40A in the second layer control menu. The control module 30 controls the display unit 41 to display the next layer menu of the "Rotation Direction", which is a third layer menu. The "Rotation Direction" third layer menu includes a "Clockwise" control mode and a "Counterclockwise" control mode for selection. If the cursor 40A points to the "Clockwise" control mode, and the right button 42D of the button unit 42 is activated, the selection signal sets the control mode to the "Clockwise" control mode. As a result, the control module 30 controls the motor module 10 to rotate in the clockwise direction. Furtherly, since there is no corresponding next layer menu, the control module controls the display unit switch to display the previous layer menu, that is, the second layer control menu 30B.

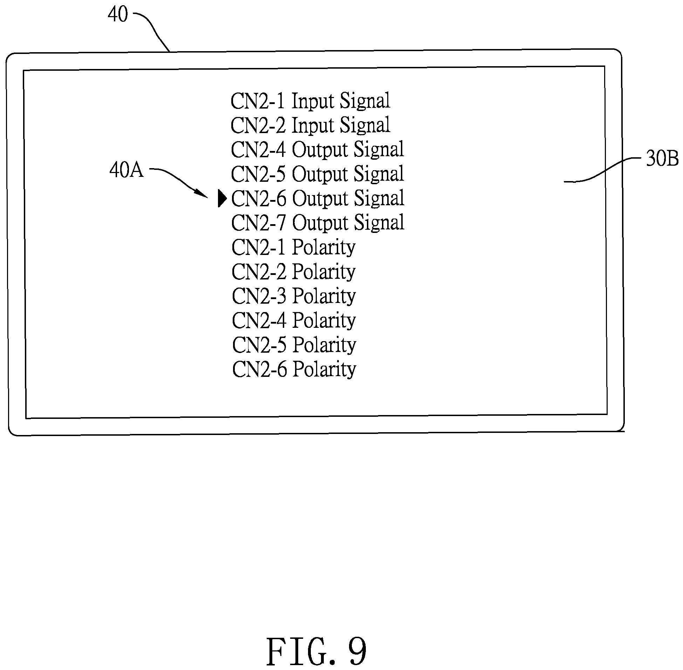

In the present embodiment, the second layer control menu 30B as shown in FIG.7 is the next layer control menu of the first layer control menu 30A as shown in FIG.6 while the control mode is in "Normal Display". Furtherly, the second layer control menu 30B as shown in FIG.8 is the next layer control menu of the first layer control menu 30A as shown in FIG.6 while the control mode is in "U Zone Setting" or "D Zone Setting". The second layer control menu 30B as shown in FIG.9 is the next layer control menu of the first layer control menu 30A as shown in FIG.6 while the control mode is in "Input/Output Menu". The control modes in the second layer control menu as shown in FIG.9 are the technical details of the driver module 20 controlling the motor module 10, and detail thereof is omitted.

In the present embodiment, the present invention further includes an optical sensor module 60 and a power module 70. The optical sensor module 60 and the power module 70 are electrically connected to the control module 30. The power module 70 provides power to the control module 30. Additionally, the control module 30 further includes a power monitor unit 31 and a motor control unit 32. The control module 30 stores a normal power information, and the normal power information includes a working voltage threshold.

The power monitor unit 31 detects the power provided by the power module 70 and determines if the power is smaller than the working voltage threshold according to the normal power information. If the power is smaller than the working voltage threshold, the power monitor unit 31 determines that the power is abnormal, and generates a power abnormal information. The control module 30 controls the display unit 41 to display an error message according to the power abnormal information.

The motor control unit 32 controls the driver module 20 to drive the motor module 10 to rotate and the motor control unit 32 detects whether the motor module 10 is driven by the driver module 20. Namely, the motor control unit 32 detects if the motor module 10 is stuck or blocked by any external force, and therefor is unable to rotate normally as the driver module 20 drives. When the motor control unit 32 determines that the motor module 10 is not driven by the driver module 20, the motor control unit 32 determines that the motor module 10 is at an abnormal working status, and the motor control unit 32 generates an abnormal working status information. As a result, the control module 30 controls the display unit 41 to display a warning message according to the abnormal working status information.

Furthermore, the motor control unit 32 detects a working status of the motor module 10 and the driver module 20 to generate a signal status information. The control module 30 controls the display unit 41 to display a signal status message according to the signal status information.

Furthermore, the control module 30 stores a pre-stored information, including multiple indication norms regarding the working status of the motor module 10 and the driver module 20. The indication norms include at least a threshold value. Therefore, the control module 30 can detect the working status of the motor module 10 and the driver module 20 and determines if there is any error or abnormal regarding the indication norms. For instance, according to the pre-stored information, a rotation speed norm of the motor module 10 is expected to be maintained at 60 RPM (Revolutions per Minute). When the rotation speed of the motor module 10 is at 67 RPM, the control module 30 detects that the rotation speed of the motor module 10 exceeds the threshold voltage of 60 RPM, therefore the control module 30 determines that the motor module is at an abnormal speeding status, and therefore controls the display unit 41 to display an error code that corresponds to the abnormal speeding status.

With reference to FIG.7, the error message, the warning message and the signal status message, or other abnormal error status are displayed in the form of error code. In the present embodiment, the error codes and the corresponding meaning are showed in Table 1 below.

**Table 1**

| CODE | MEANING | CODE | MEANING | CODE | MEANING |
|---|---|---|---|---|---|
| UV | Power under voltage | UJam | Up-area jammed | USpeed | Up-area motor speed |
| USensor | Up-area photo sensor breakdown | DJam | Down-area jammed | DSpeed | Down-area motor speed |
| DSensor | Down-area photo-sensor breakdown | ULock | Up-area motor blocked | URT | Up-area motor temperature |
| UMOT | Up-area motor over temperature | DLock | Downstream motor blocked | UCT | Down-area driver temperature |
| DMOT | Down-area motor over temperature | UCW | upstream board warning status | DCT | Down-area driver temperature |
| UCOT | Up-area driver over temperature | UW | Upstream warning status | DRT | Down-area driver circuit temperature |
| DCOT | Down-area driver over temperature | DW | Down-area warning status | UC | Up-area motor current |
| UCE | Upstream board error status | DCW | Downstream board warning status | PVolt | Power voltage |
| UE | Up-area error status | UCS | Up-area board photo-sensor status | DC | Down-area motor current |
| DE | Down-area error status | DCS | Down-area board photo-sensor status | US | Up-area photo-sensor status |
| DCE | Downstream board error status | UCM | Upstream board motor status | DS | Down-area photo-sensor status |
| | | DCM | Downstream board motor status | UM | Up-area motor status |
| | | | | DM | Down-area motor status |
| | | | | CN2-1 | Connector pin output/input signal status |
| | | | | CN2-2 | |
| | | | | CN3-4 | |
| | | | | CN2-5 | |
| | | | | CN2-6 | |
| | | | | CN2-7 | |
| | | | | CN2-3V | Connector pin-3 analog voltage value |

In Table 1, code "UV" corresponds to the power abnormal situation when the power monitor unit 31 determines that the power provided by the power module 70 is lower than the working voltage threshold. Code "ULock" corresponds to the abnormal working status when the motor control unit 32 determines that the motor module 10 cannot be driven normally by the driver module 20. Code "Uspeed" corresponds to the signal status information with rotation speed that the motor control module 32 generates when detecting the working status of the motor module 10. The control module 30 displays the corresponding data of signal status information through the display unit 41 and indicates the signal.

Meanings of the codes indicating abnormality or error as presented in Table 1 are not directly related to the main technical improvement of the present invention, and are therefore omitted herein. Table 1 shows the abundant and real-time information that the display unit 41 can provide compared to a conventional roller controller.

In the present embodiment, the power module 70 further includes a power voltage converter circuit. The power voltage converter circuit provides 24V power for the present invention. The optical sensor module 60 is mounted on the logistic conveyer 2, and further includes an infrared sensor. When the infrared sensor detects motion, moving cargo arriving at the present logistic conveyer 2, the optical sensor module 60 generates an activation signal and sends the activation signal to the control module 30. The control module 30 activates the motor module 10 upon receiving the activation signal, and starts the conveying of the cargo.

Besides, the motor control unit 32 converts an analog signal to a digital signal of the control module 30 by pulse width modulation (PWM). To be more specific, the driver module 20 includes a first driver unit 21 and a second driver unit 22, and the motor module includes a first motor 11 and a second motor 12. The first driver unit 21 is electrically connected to the first motor 11, and drives the first motor 11 to rotate. The second driver unit 22 is electrically connected to the second motor 12, and drives the second motor 12 to rotate. The first motor 11 and the second motor 12 each include a Hall sensor and a temperature sensor. The Hall sensors of the first motor 11 and the second motor 12 correspond to the rotation speed of the first motor 11 and the second motor 12, and each generates a rotation speed signal and sends the rotation speed signal to the motor control unit 32, such that the motor control unit 32 controls the driving of the first motor unit 11 and the second motor unit 12 according to the rotation speed signal. The temperature sensors of the first motor 11 and the second motor 12 detect the temperature within the first motor unit 11 and the second motor 12, generate a temperature signal and send the temperature signal to the motor control unit 32, such that the motor control unit 32 controls the driving of the first motor unit 11 and the second motor unit 12 according to the temperature signal.

Comprehensively, the terms "upstream" and "up-area" in Table indicate the status of the first driver unit 21 and the first motor unit 11, and the terms "downstream" and "down-area" indicate the status of the second driver unit 22 and the second motor unit 12.

In the logistics roller conveyer controller control system of the present invention, the control menus are displayed through the display unit of the HMI module 40, and the selection signals are generated by the button unit 42 of the HMI module 40, such that the operation of the roller controller is utterly simplified for the operators. With the onboard setting function of the present invention, the operator can set the selection signal and observe the content of the control menu, warning messages, and error messages through the HMI module 40. Compared to the indication lights of the conventional roller controller, the HMI module 40 of the present invention presents the status information of the motor module 10 operating the roller 3, improving the operating and maintaining efficiency of the rollers 3 of the logistics conveyer system.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A logistics conveyer roller control system with onboard setting functions, **characterized in that** the logistics conveyer roller control system comprises:
a motor module (10);
a driver module (20), electrically connected to the motor module (10);
a control module (30), electrically connected to the driver module (20), and storing multiple control menus;
a human-machine interface (HMI) module (41), electrically connected to the control module (30), and including a display unit (41) to display the control menus of the control module (30); wherein
when the HMI module (40) generates a selection signal, the control module (30) sets a control mode according to the selection signal, and controls the driver module (20) to drive the motor module (10) according to the control mode.

2. The logistics conveyer roller control system as claimed in claim 1, wherein
the HMI module (40) comprises a button unit (42);
when the button unit (42) is activated, the button unit (42) generates the selection signal, and the button unit (42) sends the selection signal to the control module (30);
when the control module (30) receives the selection signal, the control module (30) controls the display unit (41) to display the control mode that is set according to the selection signal.

3. The logistics conveyer roller control system as claimed in claim 2, wherein
the button unit (42) comprises an up button (42A), a down button (42B), a left button (42C), and a right button (42D);
the display unit (41) displays one of the control menus and a cursor (40A);
when the up button (42A) is activated, the cursor (40A) displayed on the display unit (41) moves upward in the control menu that is displayed;
when the down button (42B) is activated, the cursor (40A) displayed on the display unit (41) moves downward in the control menu that is displayed;
when the right button (42D) is activated, the button unit (42) generates the selection signal, and the control mode that is set corresponds to the position of the cursor (40A) displayed in the displayed control menu.

4. The logistics conveyer roller control system as claimed in claim 3, wherein
the control menus stored in the control module (30) include a first layer control menu (30A) and a second layer control menu (30B);
the second layer control menu (30B) is a next layer menu of the first layer control menu (30A), and the first layer control menu (30A) is a previous layer menu of the second layer control menu (30B);
when the left button (42C) is activated, the button unit (42) generates a back-to-the-previous-layer signal;
when the button unit (42) generates the selection signal, the control module (30) determines whether to further correspond to the next layer menu according to the control mode set by the selection signal;
when the control module (30) determines to correspond to the next layer menu according to the control mode set by the selection signal, the control module (30) controls the display unit (41) to display the next layer menu;
when the control module (30) determines not to correspond to the next layer menu according to the control mode set by the selection signal, the control module (30) controls the display unit (41) to display the previous layer menu;
when the button unit (42) generates the back-to-the-previous-layer signal, the control module (30) controls the display unit (41) to display the previous layer menu.

5. The logistics conveyer roller control system as claimed in claim 4, wherein
the control menus stored in the control module (30) include a third layer menu;
the third layer menu is the next layer menu of the second layer menu, and the second layer menu is the previous layer menu of the third layer menu.

6. The logistics conveyer roller control system as claimed in claim 1, further comprising:
a power module (70), electrically connected to the control module (30), and providing power to the control module (30);
the control module (30) storing normal power information, and the normal power information including a working voltage threshold;
the control module (30) comprising a power monitor unit (31); the power monitor unit (31) detecting the power provided by the power module (70) and determining whether a voltage of the power is lower than the working voltage threshold;
wherein when the voltage of the power is lower than the working voltage threshold, the power monitor unit (31) determines that the power is abnormal, and generates a power abnormal information;
wherein the control module (30) controls the display unit (41) to display an error message according to the power abnormal information.

7. The logistics conveyer roller control system as claimed in claim 1, wherein
the control module (30) comprises a motor control unit (32);
the motor control unit (32) controls the driver module (20) to drive the motor module (10) according to the control mode, and the motor control unit (32) detects whether the motor module (10) is driven by the driver module (20);
when the motor module (10) is not driven by the driver module (20), the motor control unit (32) determines the motor module (10) is at an abnormal working status, and the motor control unit (32) generates abnormal working status information;
the control module (30) controls the display unit (41) to display a warning message according to the abnormal working status information.

8. The logistics conveyer roller control system as claimed in claim 1, wherein
the control module (30) comprises a motor control unit (32);
the motor control unit (32) controls the driver module (20) to drive the motor module (10) according to the control mode, and the motor control unit (32) detects a working status of the motor module (10) and the driver module (20) to generate signal status information;
the control module (30) controls the display unit (41) to display a signal status message according to the signal status information.

9. The logistics conveyer roller control system as claimed in claim 1, further comprising:
a communication module (50), electrically connected to the control module (30); wherein the control module (30) generates a synchronous signal according to the control mode, and the control module (30) transmits the synchronous signal through the communication module (50).

10. The logistics conveyer roller control system as claimed in claim 9, wherein the communication module (50) is a network communication module (50), and the communication module (50) transmits the synchronous signal in a network package.

## Amended claims

### Amended claims in accordance with Rule 137(2) EPC.

1. A logistics conveyer roller control system with onboard setting functions, mounted on a circuit board (1), and **characterized in that** the logistics conveyer roller control system comprises:
a motor module (10), including a first motor (11) and a second motor (12); wherein the first motor (11) and the second motor (12) each include a respective temperature sensor; wherein the temperature sensors detect the temperature within the first motor (11) and the second motor (12), and generate a temperature signal;
a driver module (20), electrically connected to the motor module (10);
a control module (30), comprising a motor control unit (32), electrically connected to the driver module (20), and storing multiple control functions; wherein the motor control unit (32) receives the temperature signal from the temperature sensors;
a human-machine interface (HMI) module (40), electrically connected to the control module (30), and including a display unit (41) to display control menus corresponding to the control functions of the control module (30); wherein
when the HMI module (40) generates a selection signal, the control module (30) sets a control mode according to the selection signal, and the motor control unit (32) controls the driver module (20) to drive the motor module (10) according to the control mode and the temperature signal.

2. The logistics conveyer roller control system as claimed in claim 1, wherein
the HMI module (40) comprises a button unit (42);
when the button unit (42) is activated, the button unit (42) generates the selection signal, and the button unit (42) sends the selection signal to the control module (30);
when the control module (30) receives the selection signal, the control module (30) controls the display unit (41) to display the control mode that is set according to the selection signal.

3. The logistics conveyer roller control system as claimed in claim 2, wherein
the button unit (42) comprises an up button (42A), a down button (42B), a left button (42C), and a right button (42D);
the display unit (41) displays one of the control menus and a cursor (40A);
when the up button (42A) is activated, the cursor (40A) displayed on the display unit (41) moves upward in the control menu that is displayed;
when the down button (42B) is activated, the cursor (40A) displayed on the display unit (41) moves downward in the control menu that is displayed;
when the right button (42D) is activated, the button unit (42) generates the selection signal, and the control mode that is set corresponds to the position of the cursor (40A) displayed in the displayed control menu.

4. The logistics conveyer roller control system as claimed in claim 3, wherein
the control menus stored in the control module (30) include a first layer control menu (30A) and a second layer control menu (30B);
the second layer control menu (30B) is a next layer menu of the first layer control menu (30A), and the first layer control menu (30A) is a previous layer menu of the second layer control menu (30B);
when the left button (42C) is activated, the button unit (42) generates a back-to-the-previous-layer signal;
when the button unit (42) generates the selection signal, the control module (30) determines whether to further correspond to the next layer menu according to the control mode set by the selection signal;
when the control module (30) determines to correspond to the next layer menu according to the control mode set by the selection signal, the control module (30) controls the display unit (41) to display the next layer menu;
when the control module (30) determines not to correspond to the next layer menu according to the control mode set by the selection signal, the control module (30) controls the display unit (41) to display the previous layer menu;
when the button unit (42) generates the back-to-the-previous-layer signal, the control module (30) controls the display unit (41) to display the previous layer menu.

5. The logistics conveyer roller control system as claimed in claim 4, wherein
the control menus stored in the control module (30) include a third layer menu;
the third layer menu is the next layer menu of the second layer menu, and the second layer menu is the previous layer menu of the third layer menu.

6. The logistics conveyer roller control system as claimed in claim 1, further comprising:
a power module (70), electrically connected to the control module (30), and providing power to the control module (30);
the control module (30) storing normal power information, and the normal power information including a working voltage threshold;
the control module (30) comprising a power monitor unit (31); the power monitor unit (31) detecting the power provided by the power module (70) and determining whether a voltage of the power is lower than the working voltage threshold;
wherein when the voltage of the power is lower than the working voltage threshold, the power monitor unit (31) determines that the power is abnormal, and generates a power abnormal information;
wherein the control module (30) controls the display unit (41) to display an error message according to the power abnormal information.

7. The logistics conveyer roller control system as claimed in claim 1, wherein
the control module (30) comprises a motor control unit (32);
the motor control unit (32) controls the driver module (20) to drive the motor module (10) according to the control mode, and the motor control unit (32) detects whether the motor module (10) is driven by the driver module (20);
when the motor module (10) is not driven by the driver module (20), the motor control unit (32) determines the motor module (10) is at an abnormal working status, and the motor control unit (32) generates abnormal working status information;
the control module (30) controls the display unit (41) to display a warning message according to the abnormal working status information.

8. The logistics conveyer roller control system as claimed in claim 1, wherein
the control module (30) comprises a motor control unit (32);
the motor control unit (32) controls the driver module (20) to drive the motor module (10) according to the control mode, and the motor control unit (32) detects a working status of the motor module (10) and the driver module (20) to generate signal status information;
the control module (30) controls the display unit (41) to display a signal status message according to the signal status information.

9. The logistics conveyer roller control system as claimed in claim 1, further comprising:
a communication module (50), electrically connected to the control module (30); wherein the control module (30) generates a synchronous signal according to the control mode, and the control module (30) transmits the synchronous signal through the communication module (50).

10. The logistics conveyer roller control system as claimed in claim 9, wherein the communication module (50) is a network communication module (50), and the communication module (50) transmits the synchronous signal in a network package.
